**Europäisches Patentamt**

**European Patent Office**

**Office européen des brevets**

(19)

(11) Veröffentlichungsnummer: **0 169 606**
**B1**

(12) # EUROPÄISCHE PATENTSCHRIFT

(45) Veröffentlichungstag der Patentschrift:
**01.06.88**

(51) Int. Cl.⁴: **B 01 D 46/30**

(21) Anmeldenummer: **85201133.7**

(22) Anmeldetag: **09.07.85**

(54) Granulatfilter.

(30) Priorität: **25.07.84 DE 3427321**

(43) Veröffentlichungstag der Anmeldung:
**29.01.86 Patentblatt 86/5**

(45) Bekanntmachung des Hinweises auf die Patenterteilung:
**01.06.88 Patentblatt 88/22**

(84) Benannte Vertragsstaaten:
**DE FR GB IT**

(56) Entgegenhaltungen:
**DE - A - 2 741 031**
**US - A - 3 987 148**
**US - A - 4 004 897**
**US - A - 4 144 359**

(73) Patentinhaber: **METALLGESELLSCHAFT AG,**
**Reuterweg 14 Postfach 3724, D-6000 Frankfurt/M.1 (DE)**

(72) Erfinder: **Furlan, Pietro, Via Ripamonti 255,**
**I-20141 Milano (IT)**

(74) Vertreter: **Rieger, Harald, Dr., Reuterweg 14,**
**D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Granulatfilter mit mindestens einer, zwischen zwei gasdurchlässigen, Wänden eingeschlossenen Filterschicht aus körnigem Filtermaterial, zum Entstauben von Gas beim Durchströmen der Filterschicht.

Granulatfilter dieser Art sind bekannt und z.B. in den deutschen Offenlegungsschriften 3 012 911 und 3 246 183, der deutschen Auslegeschrift 2 552 298 und den US-Patentschriften 4 142 873 und 4 353 722 beschrieben. Die Filterschicht wird hierbei aus Granulat, z.B. Kies, mit einer Korngrösse im Bereich von 1 bis 5 mm gebildet. Bildet man die gasdurchlässigen Wände des Filters netzartig, z.B. als Drahtnetz, aus, so muss die Maschenweite kleiner als die kleinste Korngrösse des Filtermaterials sein, was die Gasdurchlässigkeit der Wand verringert sowie bei ausreichender Stabilität der Wand beträchtliche Herstellungskosten verursacht. Man ist deshalb bei bekannten Filtern, wie sie etwa in der DE-A-3 246 183 und DE-B-2 252 298 beschrieben sind, zu jalousieartig ausgebildeten Wänden übergegangen. Hierbei hat sich allerdings gezeigt, dass diese Filter im Betrieb zu Anbackungen an den Filterwänden neigen, weil das körnige Filtermaterial und auch der abzuscheidende Staub an den Innenflächen der Wände gute Haftungsflächen vorfinden. Diese Anbackungen am Filter regelmässig zu entfernen, ist ziemlich aufwendig.

Der Erfindung liegt die Aufgabe zugrunde, die Wände für die Granulatfilter auf einfache und kostengünstig herstellbare Weise so auszubilden, dass Anbackungen an den Wänden nach Möglichkeit vermieden werden. Beim eingangs genannten Granulatfilter geschieht dies erfindungsgemäss dadurch, dass mindestens eine Wand zahlreiche, in die Filterschicht gerichtete, nasenartige Vorsprünge aufweist, wobei jeder Vorsprung eine Wandöffnung mit senkrechtem unterem Wandabschnitt mindestens teilweise so überdeckt, dass das Gas, nicht jedoch das Filtermaterial, durch die Wandöffnung treten kann.

Für die Wandöffnungen und die zugehörigen nasenartigen Vorsprünge sind verschiedene Abwandlungen von der Grundform möglich. Zum Beispiel können die Vorsprünge gleichmässig gekrümmt oder auch abgewinkelt ausgebildet sein und auch die Wandöffnungen können von der sich anbietenden Dreiecksform mehr oder weniger abweichen. Im allgemeinen haben die Wandöffnungen grösste Öffnungsweiten von 0,5 bis 10 cm und vorzugsweise 1 bis 5 cm. Vorteilhaft ist hierbei, dass die grössten Öffnungsweiten grösser als die Körner des Filtergranulats, das eine Körnung etwa im Bereich von 1 bis 5 mm aufweist, ausgebildet sein können, so dass gute Gasdurchlässigkeit der Filterwand gegeben ist.

Es ist zweckmässig, die Vorsprünge gegenüber dem zugehörigen unteren Wandabschnitt um eine grösste Strecke a, horizontal gemessen, von 0,2 bis 5 cm vorspringen zu lassen. Streng genommen liegt die Obergrenze dieses Masses nicht fest und kann auch höher als hier angegeben sein, doch werden praktische Überlegungen eine sinnvolle obere Grenze ergeben.

Eine bevorzugte Ausgestaltung besteht darin, dass die Wandöffnungen horizontale Reihen bilden, wobei die Wandöffnungen der nächsthöheren Reihe gegenüber den Wandöffnungen der unmittelbar darunterliegenden Reihe versetzt angeordnet sind. Diese Anordnung der Wandöffnungen ermöglicht sowohl eine hohe Gasdurchlässigkeit als auch gute Festigkeit der Wand, ohne dass am Eintritt des zu entstaubenden Gases Haftflächen für Anbackungen entstehen.

Die Wände einer Filterschicht können eben, gewinkelt oder gekrümmt ausgebildet sein. Häufig sind die beiden Wände zylindrisch und konzentrisch zueinander angeordnet, so dass die dazwischenliegende Filterschicht zylindrisch ist. Die Wand an der Gaseintrittsseite kann anders als die Wand der Gasaustrittsseite ausgebildet sein, da Anbackungen bevorzugt an der Wand der Gaseintrittsseite entstehen. Deshalb empfiehlt sich die erfindungsgemässe Ausbildung besonders für die Gaseintrittswand.

Einzelheiten des Granulatfilters werden mit Hilfe der Zeichnung erläutert. Es zeigt:

Fig. 1 in schematischer Darstellung eine dem Stand der Technik entsprechende Granulatfilterschicht,

Fig. 2 in vergrösserter Darstellung eine dem Stand der Technik entsprechende Granulatfilterschicht mit jalousieartigen Wänden,

Fig. 3 in der Darstellung ähnlich Fig. 2 eine erfindungsgemässe Granulatfilterschicht mit den zugehörigen Wänden und

Fig. 4 in Draufsicht eine Filterwand mit unterschiedlich ausgebildeten Vorsprüngen.

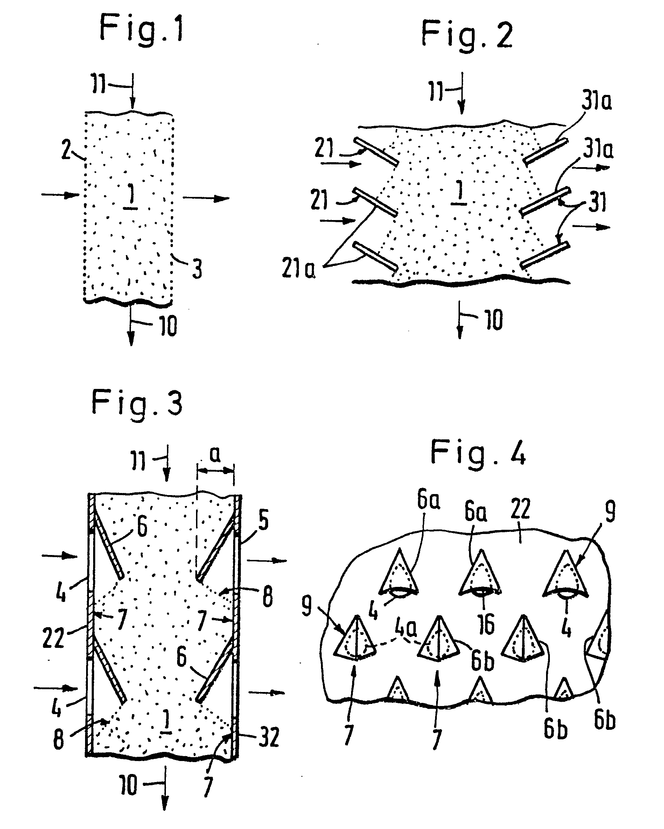

Der prinzipiellen Darstellung der Fig. 1 gemäss bestehen bekannte Granulatfilter aus einer Filterschicht 1, die aus einer Schüttung aus körnigem Filtermaterial mit Korngrössen üblicherweise im Bereich von 1 bis 5 mm gebildet wird. Die Filterschicht ist zwischen zwei gasdurchlässigen Wänden 2 und 3 angeordnet. Die Wände 2 und 3 der Fig. 1 können z.B. durch engmaschige Drahtnetze gebildet sein. Das zu entstaubende Rohgas durchströmt die Filterschicht 1 und die sie begrenzenden Wände 2 und 3 etwa horizontal, wobei sich der Staub an der Oberfläche der Filterkörner anlagert. Das körnige Filtermaterial wird periodisch oder kontinuierlich aus der Reinigungszone entfernt, wobei es zusammen mit dem abgeschiedenen Staub unter Schwerkraftwirkung nach unten (Pfeil 10) fliesst. Von oben (Pfeil 11) wird frisches, ganz oder weitgehend staubfreies Filtermaterial zugeführt.

Um die Wände des Granulatfilters möglichst gasdurchlässig auszubilden, wurden jalousieartige Wände 21 und 31 verwendet, wie sie in Fig. 2 im Längsschnitt dargestellt sind. Diese Wände bestehen aus einzelnen, übereinander angeordneten Lamellen 21a bzw. 31a. Durch den sich am Rand der Filterschicht 1 zwischen den Lamellen ausbildenden Schüttwinkel sitzt die Filterschicht auf der Oberseite jeder Lamelle und bedeckt diese schräge Oberseite teilweise.

Beim Betrieb der Granulatfilter mit der in Fig. 2 angegebenen Struktur bilden sich auf den Lamellen 21a, 31a dort, wo die Filterschicht 1 die Lamellen berührt, Anbackungen aus. Diese Anbackungen kommen durch die im Gas, das durch das Filter strömt, vorhandenen Stoffe zustande. Das Gas enthält nämlich häufig neben dem Staub auch Feuchtigkeit, so dass vor allem im Bereich des Gaseintritts Filterkörner mit Staub auf der Oberseite der Lamellen festkleben. Bei der Abwärtsbewegung der Filterschicht 1, die kontinuierlich oder periodisch vor sich geht, bleiben die Anbackungen an der Oberseite der Lamellen erhalten und können oft nur mit Mühe und unter zusätzlichen Kosten abgelöst werden.

Beim Granulatfilter der Fig. 3 und 4 entstehen solche Anbackungen an den Filterwänden 22 und 32 nicht, zumindest aber weit langsamer als beim Filter der Fig. 2. Diese Filterwände 22 und 32 weisen über den Öffnungen 4, 5 nasenartige, in die Filterschicht 1 hineingerichtete, dachartige Vorsprünge 6 auf. Die Vorsprünge 6 decken die der Gasdurchlässigkeit dienenden Öffnungen 4, 5 ab und verhindern, dass das körnige Filtermaterial durch die Öffnungen nach aussen traten kann. Zu jeder Öffnung gehört ein glatter, senkrechter, unterer Wandabschnitt 7, an dessen Innenseite das körnige Filtermaterial anliegt. An diesem glatten Wandabschnitt 7 entstehen viel weniger leicht Anbackungen als auf der schrägen Oberseite lamellenartiger Wandstrukturen. Die Oberseite des nasenartigen Vorsprungs ist vom körnigen Filtermaterial ganz bedeckt und von der Aussenseite 8 der Granulatschüttung um eine gewisse Strecke entfernt.

Der Betrieb bekannter Filter etwa gemäss Fig. 2 hat gezeigt, dass die stärkste Neigung zum Bilden von Anbackungen dort besteht, wo die Aussenseite 8 der Filterschicht 1 auf eine schräg verlaufende Oberfläche der Filterwand trifft. Dieser besonders gefährdete Wandbereich ist beim erfindungsgemässen Filter der Fig. 3 und 4 senkrecht ausgebildet, wodurch dort Anbackungen nicht oder kaum noch entstehen.

Fig. 4 zeigt einen Ausschnitt einer Filterwand 22 in der Draufsicht auf deren Innenseite. In Fig. 4 sind vor allem zwei Reihen der nasenartigen Vorsprünge 6a, 6b zu sehen, wobei die Vorsprünge 6b gewinkelt und die Vorsprünge 6a über die jeweilige Öffnung 4 gewölbt ausgebildet sind. Die von der Spitze eines Vorsprungs nach unten und aussen verlaufenden Seitenkanten 9 sind mit der Wand 22 verbunden. Selbstverständlich kann eine Wand 22 allein nur mit gleich ausgebildeten Vorsprüngen ausgebildet sein. Vorzugsweise liegen die Wandöffnungen 4 der oberen Reihe versetzt über den Wandöffnungen 4a der nächstniedrigeren horizontalen Reihe, wodurch der zu jeder Wandöffnung gehörende senkrechte untere Wandabschnitt 7 eine grosse Fläche erhält. Die Vorsprünge 6a der oberen Reihe überdecken mit ihrer Unterkante 16 die jeweilige Wandöffnung 4 etwas weniger als dies bei den Vorsprüngen 6b der unteren Reihe der Fall ist, doch ist durch den Schüttwinkel des körnigen Filtermaterials gewährleistet, dass auch durch die Öffnungen 4 kein körniges Filtermaterial austreten kann.

In der Praxis liegen die grössten Öffnungsweiten einer Wandöffnung 4, 4a, 5 etwa im Bereich von 0,5 bis 10 cm und vorzugsweise im Bereich von 1 bis 5 cm. Die nasenartigen Vorsprünge 6, 6a, 6b ragen um eine grösste Strecke a, vgl. Fig. 3, von 0,2 bis 5 cm in die Filterschicht hinein. Die Öffnungen 4, 4a und 5, vgl. auch Fig. 4, haben in der Draufsicht etwa die gleiche Form wie die zugehörigen Vorsprünge, nämlich etwa Dreiecksform, ihre Fläche ist daher etwas kleiner.

## Patentansprüche

1. Granulatfilter mit mindestens einer, zwischen zwei gasdurchlässigen Wänden eingeschlossenen Filterschicht aus körnigem Filtermaterial, zum Entstauben von Gas beim Durchströmen der Filterschicht, dadurch gekennzeichnet, dass mindestens eine Wand zahlreiche, in die Filterschicht gerichtete, nasenartige Vorsprünge aufweist, wobei jeder Vorsprung eine Wandöffnung mit senkrechtem unterem Wandabschnitt mindestens teilweise so überdeckt, dass das Gas, nicht jedoch das Filtermaterial, durch die Wandöffnung treten kann.

2. Filter nach Anspruch 1, dadurch gekennzeichnet, dass die Wandöffnungen grösste Öffnungsweiten von 0,5 bis 10 cm und vorzugsweise von 1 bis 5 cm besitzen.

3. Filter nach Anspruch 1 oder 2, dadurch gekennzeichnet, dass die Vorsprünge gegenüber dem zugehörigen unteren Wandabschnitt um eine grösste Strecke (a), horizontal gemessen, von 0,2 bis 5 cm vorspringen.

4. Filter nach Anspruch 1 oder einem der folgenden, dadurch gekennzeichnet, dass die Wandöffnungen horizontale Reihen bilden, wobei die Wandöffnungen der nächsthöheren Reihe gegenüber den Wandöffnungen der unmittelbar darunterliegenden Reihe versetzt angeordnet sind.

## Claims

1. Filter of granulated material, with at least one filter layer of ganular filter material, which is enclosed between two gas-permeable walls, for the removal of dust from gas on flowing through the filter layer, characterized in that at least one wall has numerous nose-like projections, directed into the filter layer, in which each projection covers a wall opening with a vertical lower wall section at least partially, such that the gas, but not the filter material, can pass through the wall opening.

2. Filter according to Claim 1, characterized in that the wall openings have maximum opening widths of from 0.5 to 10 cm, and preferably from 1 to 5 cm.

3. Filter according to Claim 1 or 2, characterized in that the projections project with respect to the associated lower wall section by a maximum extent (a), measured horizontally, of from 0.2 to 5 cm.

4. Filter according to Claim 1 or one of the subsequent claims, characterized in that the wall openings from horizontal rows, in which the wall openings of the next highest row are arranged so as to be staggered with respect to the wall openings of the row lying immediately beneath.

## Revendications

1. Filtre constitué d'une matière granulée et comprenant au moins une couche filtrante en une matière filtrante en grains et enfermée entre deux parois perméables au gaz, pour dépoussiérer du gaz lorsqu'il passe à travers la couche filtrante, caractérisé en ce que l'une au moins des parois comporte un grand nombre de parties saillantes, en forme de becs, dirigées vers la couche filtrante, chaque partie saillante recouvrant de telle manière, au moins partiellement, un orifice ménagé dans la paroi avec une section de paroi inférieure et verticale, que le gaz, mais non la matière filtrante, puisse passer par l'orifice ménagé dans la paroi.

2. Filtre suivant la revendication 1, caractérisé en ce que les orifices ménagés dans la paroi ont des largeurs d'ouverture les plus grandes de 0,5 à 10 cm, de préférence de 1 à 5 cm.

3. Filtre suivant la revendication 1 ou 2, caractérisé en ce que les parties saillantes font saillie, par rapport à la section inférieure de paroi correspondante, d'une distance (a) la plus grande de 0,2 à 5 cm mesurée horizontalement.

4. Filtre suivant la revendication 1 ou l'une des suivantes, caractérisé en ce que les orifices ménagés dans la paroi forment des rangées horizontales, les orifices ménagés dans la paroi de la rangée immédiatement supérieure étant décalés par rapport aux orifices ménagés la paroi de la rangée se trouvant immédiatement en-dessous.

# Fig.1

# Fig. 2

# Fig.3

# Fig. 4